(19) Europäisches Patentamt / European Patent Office / Office européen des brevets

(11) **EP 4 007 107 B1**

(12) **EUROPEAN PATENT SPECIFICATION**

(45) Date of publication and mention of the grant of the patent:
**01.05.2024 Bulletin 2024/18**

(21) Application number: **19912224.3**

(22) Date of filing: **23.07.2019**

(51) International Patent Classification (IPC):
**H02J 3/16** (2006.01)    **H02J 3/38** (2006.01)

(52) Cooperative Patent Classification (CPC):
**H02J 3/16; H02J 3/381;** H02J 2300/24;
H02J 2300/26; H02J 2300/28; Y02E 40/30

(86) International application number:
**PCT/JP2019/028890**

(87) International publication number:
**WO 2021/014581 (28.01.2021 Gazette 2021/04)**

(54) **POWER CONVERSION DEVICE AND DISTRIBUTED POWER SUPPLY SYSTEM**

STROMWANDLER UND VERTEILTES STROMVERSORGUNGSSYSTEM

DISPOSITIF DE CONVERSION DE PUISSANCE ET SYSTÈME D'ALIMENTATION DISTRIBUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **TOSHIBA MITSUBISHI-ELECTRIC INDUSTRIAL SYSTEMS CORPORATION**
Chuo-ku
Tokyo 104-0031 (JP)

(72) Inventors:
• **SHIGEMASA, Takashi**
Tokyo 104-0031 (JP)
• **MITSUGI, Yasuaki**
Tokyo 104-0031 (JP)
• **HIRA, Katsuya**
Tokyo 104-0031 (JP)

(74) Representative: **TBK**
**Bavariaring 4-6**
**80336 München (DE)**

(56) References cited:
JP-A- S54 134 352        JP-A- 2017 034 739
JP-A- 2017 063 525       JP-A- 2017 108 489
US-A1- 2013 250 635      US-A1- 2015 303 861
US-A1- 2018 048 154      US-A1- 2019 181 639

• ANNA RITA DI FAZIO ET AL: "Decentralised voltage regulation in smart grids using reactive power from renewable DG", ENERGY CONFERENCE AND EXHIBITION (ENERGYCON), 2012 IEEE INTERNATIONAL, IEEE, 9 September 2012 (2012-09-09), pages 580-586, XP032466741, DOI: 10.1109/ENERGYCON.2012.6348220 ISBN: 978-1-4673-1453-4
• WANG LIJUN ET AL: "A Voltage Stability Control based on Impedance Estimation for the Independent Microgrid", 2018 IEEE INTERNATIONAL POWER ELECTRONICS AND APPLICATION CONFERENCE AND EXPOSITION (PEAC), IEEE, 4 November 2018 (2018-11-04), pages 1-5, XP033476837, DOI: 10.1109/PEAC.2018.8590374 [retrieved on 2018-12-26]

EP 4 007 107 B1

**Description**

[Field]

Embodiments described herein relate generally to a power conversion device and a distributed power source system.

[Background Art]

In a distributed power source system using a distributed power source such as a solar power generator, a wind power generator, a battery, and the like connected to an electric power system, reactive power is supplied from the distributed power source to the connection point to compensate the voltage fluctuation amount of the connection point of the distributed power source. The supply of the reactive power is controlled by a power conversion device converting the electrical power of the distributed power source into electrical power corresponding to the electric power system.

For example, a control is known in which reactive power is supplied to the connection point so that the power factor is constant. The voltage fluctuation of the connection point caused by the active power supplied from the distributed power source can be suppressed thereby.

However, for reactive power control using a fixed power factor, there is a possibility that the voltage of the connection point may increase and power transmission cannot be performed when the electrical power supplied by the distributed power source is increased if the system impedance is large such as for a distal distributed power source, etc.

It has been proposed to estimate the apparent system characteristics when viewed from the connection point of the distributed power source by using a linear approximation formula and to supply the reactive power based on the estimation result. The reactive power that corresponds to the system impedance and the like can be supplied thereby; and the fluctuation of the voltage can be suppressed even when the system impedance is large.

However, for example, when there are other distributed power plants, plant loads, etc., directly proximal to the connection point, it has been difficult to appropriately suppress the voltage fluctuation of the connection point even by voltage suppression control using a linear approximation formula because the fluctuation of the system characteristics is severe due to the directly proximal load fluctuation and/or the output fluctuation of directly proximal power sources, the output fluctuation of many connected power sources, and the effects of a transformer tap change due to control factors on the system operation side, SVC (Static Var Controller) control, AVR (Automatic Voltage Controller) control, etc. Therefore, it is desirable to be able to suppress the voltage fluctuation of the connection point of the distributed power source more appropriately even when the fluctuation of the system characteristics is severe in a distributed power source system and a power conversion device used in the distributed power source system.

[Prior Art Documents]

[Patent Documents]

[Patent Document 1]
JP-A 2017-34739 (Kokai)

Document "Decentralised voltage regulation in smart grids using reactive power from renewable DG" by Anna Rita Di Fazio, Giuseppe Fusco, and Mario Russo, ENERGY CONFERENCE AND EXHIBITION (ENERGYCON), 2012 IEEE International, IEEE, 9 September 2012 (2012-09-09), pages 580-586, discloses a decentralised approach to guarantee an optimal voltage profile along the feeders of a distribution system with Distributed Generation (DG) from renewable sources. The goal is achieved by using a reactive power closed-loop control scheme for the DG device. The reference value is designed by solving a minimisation problem, which is formulated using only local measurements and avoiding any data exchange with other control systems in the grid. Variations of the operating conditions of the distribution system are estimated to update the formulation of the minimization problem. Numerical results are presented to give evidence of the effectiveness of the proposed approach.

Document "A Voltage Stability Control based on Impedance Estimation for the Independent Microgrid" by WANG LIJUN ET AL., 2018 IEEE INTERNATIONAL POWER ELECTRONICS AND APPLICATION CONFERENCE AND EXPOSITION (PEAC), IEEE, 4 November 2018 (2018-11-04), pages 1-5, discloses a feeder power-flow control strategy of microsource inverters based on line impedance real-time estimating. The feeder impedance of the microsource is estimated with an extended Kalman filter algorithm, so the distribution factor of feeder reactive power can be adjusted accordingly.

Document US 2013/250635 A1 discloses a photovoltaic power plant including solar cells and inverters that convert direct current generated by the solar cells to alternating current. The reactive powers generated by the inverters are based on a reactive power generated by a virtual inverter. The virtual inverter has an equivalent impedance representing the impedances of the inverters in the photovoltaic power plant. The reactive power setpoints of the inverters may be received from a local interpreter. The local interpreter may generate the reactive power setpoints from a global reactive power setpoint generated by a grid controller.

Document US 2019/181639 A1 discloses systems and methods to incorporate control of reactive power produced by a variable reactive power output inverter that is installed in an existing installed power generation site. A reactive power output command value limiter is integrated with the variable reactive power output inverter. The reactive power command limiter iteratively receives a reactive power command value, determines a threshold reactive power output value based on present real power output, determines that the reactive power command value exceeds the threshold reactive power output value, changes, based on the determining that the reactive power command value exceeds the threshold reactive power output value, the reactive power output command input value to a limited value reactive power output command that is one of equal to or less than the threshold reactive power output value, and outputs the limited value reactive power output command to the variable reactive power output inverter.

Document US 2015/303861 A1 discloses a system for online filtering of photovoltaic (PV) output signals including a programmable filter that is programmed to decompose measured PV output power into an estimated low-frequency signal component, based substantially on movement of the sun and an estimated high-frequency signal component, based substantially on cloud shading. An open loop controller generates a reactive power compensation signal based on at least one of the low-frequency signal component and the high-frequency signal component. The low-frequency signal component is defined by a positive portion of a sine curve that is based substantially on movement of the sun.

[Summary of Invention]

[Problem to be Solved by the Invention]

It is an object of the invention to provide a power conversion device and a distributed power source system in which the voltage fluctuation of the connection point of a distributed power source can be suppressed more appropriately even when the fluctuation of the system characteristics is severe.

[Means for Solving the Problem]

This object is solved by a power conversion device as set out in claim 1.

According to an embodiment of the invention, a power conversion device is configured to connect a distributed power source to an electric power system connected to an infinite bus power system by converting electrical power of the distributed power source into alternating current power corresponding to the electric power system and by supplying the alternating current power after the converting to the electric power system; the power conversion device includes a major circuit part configured to convert the electrical power of the distributed power source into the alternating current power corresponding to the electric power system, and a controller configured to control an operation of the major circuit part; the controller includes an estimated value calculator, a reactive power calculator, and a drive circuit; the estimated value calculator being configured to calculate an estimated value of a resistance component of a system impedance of the electric power system, an estimated value of a reactance component of the system impedance, and an estimated value of a voltage value of the infinite bus power system based on an active power value of the connection point to the electric power system, a reactive power value of the connection point, and a voltage value of the connection point by using a Kalman filter applicable to a nonlinear equation; the reactive power calculator being configured to calculate a reactive power command value of reactive power supplied to the electric power system based on the estimated value of the resistance component of the system impedance, the estimated value of the reactance component of the system impedance, and the estimated value of the voltage value of the infinite bus power system; the drive circuit being configured to drive the major circuit part to output a prescribed active power and reactive power corresponding to the reactive power command value; the estimated value calculator includes a low-speed estimation calculator, a high-speed estimation calculator, and a control circuit; the low-speed estimation calculator being configured to calculate the estimated value of the resistance component of the system impedance, the estimated value of the reactance component of the system impedance, and the estimated value of the voltage value of the infinite bus power system; the high-speed estimation calculator being configured to calculate the estimated value of the resistance component of the system impedance, the estimated value of the reactance component of the system impedance, and the estimated value of the voltage value of the infinite bus power system by sampling the active power value, the reactive power value, and the voltage value of the connection point at a faster sampling rate than the low-speed estimation calculator; the control circuit being configured to selectively operate only one of the low-speed estimation calculator or the high-speed estimation calculator by controlling a switching of the low-speed estimation calculator and the high-speed estimation calculator; the low-speed estimation calculator and the high-speed estimation calculator being configured to calculate a predicted value of the voltage value of the connection point based on the estimated value of the resistance component of the system impedance, the estimated value of the reactance component of the system impedance, and the estimated value of the voltage value of the infinite bus power system and to determine a prediction error of the voltage value of the connection point based on a measured value of the voltage value of the connection point and the predicted value of the voltage value of the connection point; the control circuit being configured to stop the operation of the low-speed estimation calculator and to start the operation of the high-speed estimation calculator when an absolute value of the prediction error input from the low-speed estimation calculator in a state of stopping the operation of the high-speed estimation calculator and operating the low-speed estimation calculator is greater than a first threshold, and to stop the operation of the high-speed estimation calculator and to start the operation of the low-speed estimation calculator when the absolute value of the prediction error input from the high-speed estimation calculator in a state of stopping the operation of the low-speed estimation calculator and operating the high-speed estimation calculator is less than a second threshold less than the first threshold.

[Effects of the Invention]

According to an embodiment of the invention, a power conversion device and a distributed power source system are provided in which the voltage fluctuation of the connection point of a distributed power source can be suppressed more appropriately even when the fluctuation of the system characteristics is severe.

[Brief Description of Drawings]

[Fig. 1]

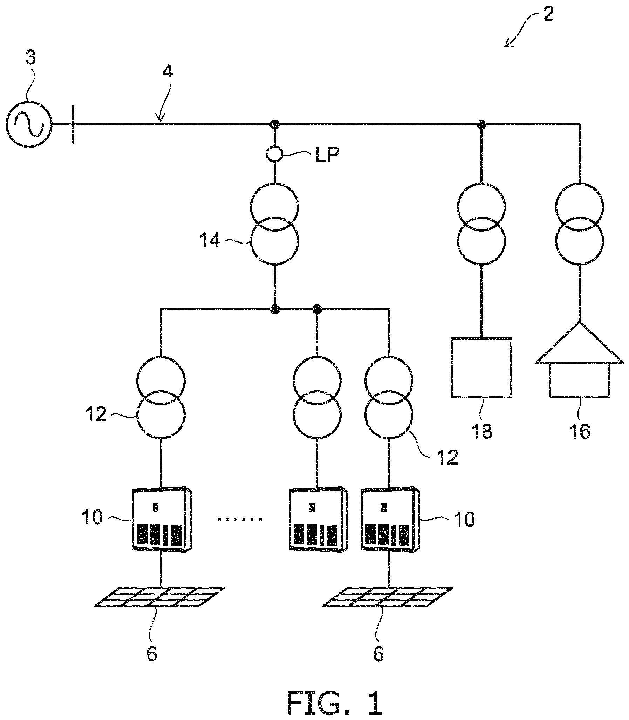

FIG. 1 is a block diagram schematically illustrating a distributed power source system according to an embodiment.
[Fig. 2]

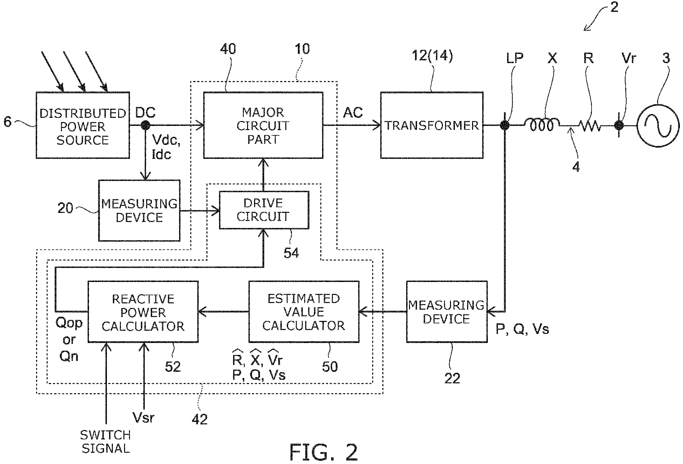

FIG. 2 is a block diagram schematically illustrating the power conversion device of the distributed power source system according to the embodiment.
[Fig. 3]

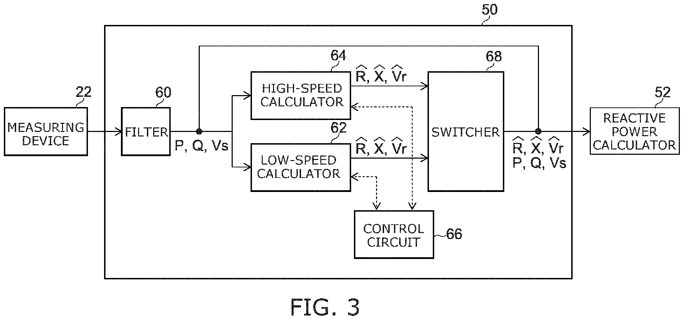

FIG. 3 is a block diagram schematically illustrating the estimated value calculator according to the embodiment.
[Fig. 4]

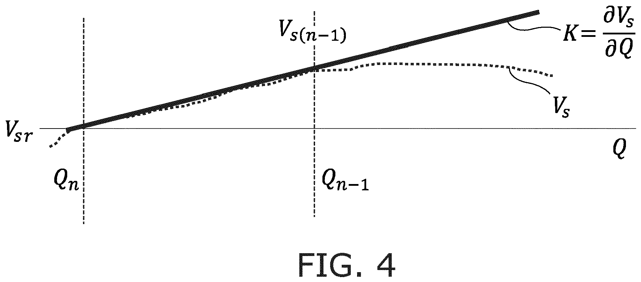

FIG. 4 is a graph schematically illustrating an example of the operation of the reactive power calculator.
[Fig. 5]

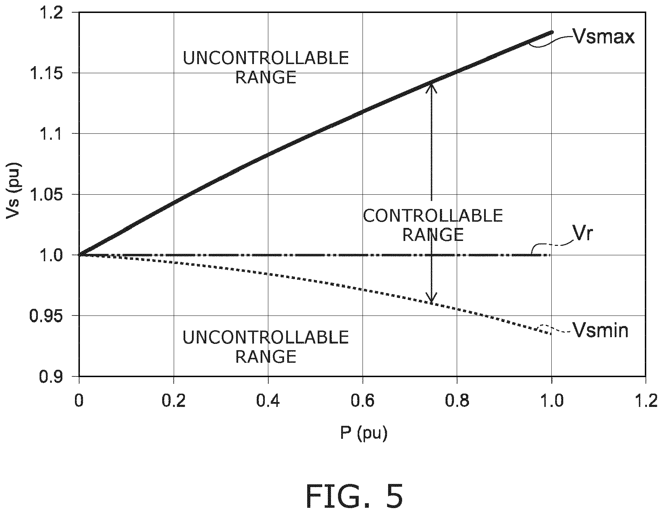

FIG. 5 is a graph schematically illustrating an example of the operation of the distributed power source system according to the embodiment.
[Fig. 6]

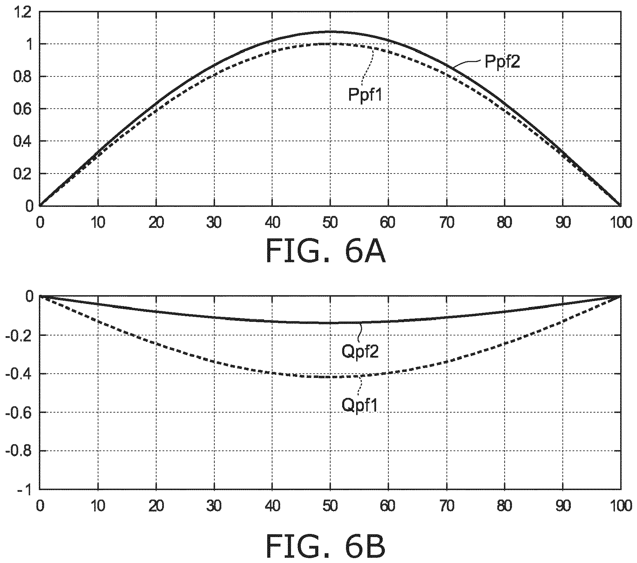

FIG. 6A and FIG. 6B are graphs schematically illustrating an example of the operation of the distributed power source system according to the embodiment.

[Description of Embodiments]

Embodiments will now be described with reference to the drawings.
The drawings are schematic and conceptual; and the relationships between the thicknesses and widths of portions, the proportions of sizes among portions, etc., are not necessarily the same as the actual values. Also, the dimensions and proportions may be illustrated differently among drawings, even for identical portions.
In the specification and drawings, components similar to those described previously or illustrated in an antecedent drawing are marked with the same reference numerals; and a detailed description is omitted as appropriate.
FIG. 1 is a block diagram schematically illustrating a distributed power source system according to an embodiment.
As illustrated in FIG. 1, the distributed power source system 2 includes a power conversion device 10, a distributed power source 6, and an electric power system 4 connected to an infinite bus power system 3. The electrical power of the electric power system 4 is alternating current power. The electrical power of the electric power system 4 is, for example, three-phase alternating current power.
The distributed power source 6 is, for example, a solar panel. The electrical power of the distributed power source 6 is direct current power. The power conversion device 10 is connected to the distributed power source 6 and is connected to the electric power system 4 via transformers 12, 14, etc. The power conversion device 10 connects the distributed power source 6 to the electric power system 4 by converting the direct current power of the distributed power source 6 into alternating current power corresponding to the electric power system 4 and by supplying the alternating current power after the conversion to the electric power system 4.

The distributed power source 6 is not limited to a solar panel and may be, for example, another generator such as a wind power generator, a gas turbine generator, etc. Also, the distributed power source 6 may be, for example, a charge storage element such as a storage battery, a capacitor, etc.

Other than the distributed power source 6 and the power conversion device 10, for example, there is a possibility that a consumer 16 (a load), another generator 18, etc., are connected directly proximal to the electric power system 4. Based on the output of the distributed power source 6, the power conversion device 10 supplies active power to the electric power system 4 and supplies the optimal reactive power to the electric power system 4. Thereby, the power conversion device 10 suppresses the undesirable fluctuation of the voltage of a connection point LP to the electric power system 4 due to it's own supply of the active power and the effects of the consumer 16 and/or the generator 18.

FIG. 2 is a block diagram schematically illustrating the power conversion device of the distributed power source system according to the embodiment.

As illustrated in FIG. 2, the power conversion device 10 includes a major circuit part 40 and a controller 42. The major circuit part 40 converts the direct current power or the alternating current power supplied from the distributed power source 6 into the alternating current power corresponding to the electric power system 4. The controller 42 controls the operation of the major circuit part 40.

The major circuit part 40 includes, for example, multiple switching elements and converts the electrical power by the ON/OFF of the multiple switching elements. The controller 42 controls the conversion of the electrical power by the major circuit part 40 by controlling the ON/OFF switching of the multiple switching elements of the major circuit part 40. The major circuit part 40 includes, for example, a well-known inverter circuit. The configuration of the major circuit part 40 may be any configuration that can perform the power conversion recited above.

The distributed power source system 2 further includes, for example, measuring devices 20 and 22. The measuring device 20 detects a voltage value Vdc of the direct current voltage input from the distributed power source 6 to the power conversion device 10 and a current value Idc of the direct current input from the distributed power source 6 to the power conversion device 10, and inputs the detected voltage value Vdc and the detected current value Idc to the controller 42.

For example, the controller 42 performs a control using the MPPT (Maximum Power Point Tracking) technique in which the direct current power is caused to track the maximum power point of the distributed power source 6. For example, based on the voltage value Vdc and the current value Idc detected by the measuring device 20, the controller 42 extracts the maximum power point (the optimal operating point) of the distributed power source 6 and controls the operation of the major circuit part 40 to supply, to the electric power system 4, an active power corresponding to the extracted maximum power point.

However, the method for determining the active power supplied from the power conversion device 10 to the electric power system 4 is not limited to the MPPT technique. For example, the active power that is supplied from the power conversion device 10 to the electric power system 4 may be determined based on an active power command value input from a higher-level controller, etc. The controller 42 may control the operation of the major circuit part 40 to supply, to the electric power system 4, an active power corresponding to the input active power command value.

The measuring device 22 detects an active power value P of the connection point LP of the power conversion device 10 to the electric power system 4, a reactive power value Q of the connection point LP, and a voltage value Vs of the connection point LP, and inputs the detected active power value P, the detected reactive power value Q, and the detected voltage value Vs to the controller 42.

The controller 42 includes an estimated value calculator 50, a reactive power calculator 52, and a drive circuit 54. The controller 42 inputs, to the estimated value calculator 50, the active power value P, the reactive power value Q, and the voltage value Vs input from the measuring device 22.

Based on the active power value P, the reactive power value Q, and the voltage value Vs input from the measuring device 22, the estimated value calculator 50 calculates an estimated value ^R of a resistance component R of the system impedance of the electric power system 4, an estimated value ^X of a reactance component X of the system impedance of the electric power system 4, and an estimated value ^Vr of a voltage value Vr of the infinite bus power system 3. ^ (hat) which represents the estimated values such as ^R and the like is the notation directly above *R* and the like as illustrated in FIG. 2, etc., but is shifted in the notation as in ^R to accommodate the formatting in the specification.

In other words, the estimated value calculator 50 estimates the system characteristics of the electric power system 4 based on the active power value P, the reactive power value Q, and the voltage value Vs. In this case, the estimated value calculator 50 considers the system model of the electric power system 4 to be the simplest system model of only the resistance component R and the reactance component X of the system impedance as illustrated in FIG. 2.

By using a Kalman filter applicable to a nonlinear equation, the estimated value calculator 50 calculates the estimated values ^R, ^X, and ^Vr from the active power value P, the reactive power value Q, and the voltage value Vs.

More specifically, the estimated value calculator 50 calculates the estimated values ^R, ^X, and ^Vr from the active power value P, the reactive power value Q, and the voltage value Vs by using an extended Kalman filter. The estimated value calculator 50 inputs the calculated estimated values ^R, ^X, and ^Vr to the reactive power calculator 52. Also, the estimated value calculator 50 also inputs the active power value P, the reactive power value Q, and the voltage value Vs used in the calculation to the reactive power calculator 52 with the estimated values ^R, ^X, and ^Vr.

The Kalman filter that is applicable to the nonlinear equation is not limited to an extended Kalman filter and may be, for example, an Unscented Kalman filter, an ensemble Kalman filter, etc. However, compared to these filters, the calculation load of the estimated value calculator 50 can be reduced by using an extended Kalman filter.

The estimated values ^R, ^X, and ^Vr, the active power value P, the reactive power value Q, and the voltage value Vs from the estimated value calculator 50 are input to the reactive power calculator 52; and a designated value Vsr of the voltage of the connection point LP and a switch signal are input to the reactive power calculator 52. For example, the designated value Vsr of the voltage of the connection point LP and the switch signal are input to the reactive power calculator 52 from a higher-level controller via a network, etc. For example, the designated value Vsr of the voltage of the connection point LP and the switch signal may be manually inputtable by an operator or the like. Also, the designated value Vsr of the voltage of the connection point LP may be a preset constant value, etc.

Based on the estimated values ^R, ^X, and ^Vr input from the estimated value calculator 50, the reactive power calculator 52 calculates a reactive power command value Qop of the reactive power supplied to the electric power system 4. The reactive power command value Qop is a command value of the reactive power supplied to the electric power system 4 to cause the voltage value Vs of the connection point LP to approach the voltage value Vr of the infinite bus power system 3 (to set *Vs = Vr*).

Also, the reactive power calculator 52 calculates a reactive power command value Qn of the reactive power supplied to the electric power system 4 based on the estimated values ^R, ^X, and ^Vr, the active power value P, the reactive power value Q, and the voltage value Vs input from the estimated value calculator 50 and the designated value Vsr of the voltage of the connection point LP input from the higher-level controller or the like. The reactive power command value Qn is a command value of the reactive power supplied to the electric power system 4 to cause the voltage value Vs of the connection point LP to approach the designated value Vsr (to set *Vs = Vsr*).

Based on the switch signal input from the higher-level controller, the operator (the console), etc., the reactive power calculator 52 calculates one of the reactive power command value Qop or the reactive power command value Qn. In other words, by inputting the switch signal to the reactive power calculator 52 in the power conversion device 10, switching can be performed between controlling the reactive power supplied to the electric power system 4 so that *Vs = Vr,* or controlling the reactive power supplied to the electric power system 4 so that *Vs = Vsr.* The reactive power calculator 52 inputs the calculated reactive power command value Qop or reactive power command value Qn to the drive circuit 54.

The reactive power command value Qop or the reactive power command value Qn which is calculated by the reactive power calculator 52 is input to the drive circuit 54; and the voltage value Vdc and the current value Idc of the distributed power source 6 which are measured by the measuring device 20 are input to the drive circuit 54.

The drive circuit 54 determines the active power by a control using the MPPT technique based on the voltage value Vdc and the current value Idc and drives the major circuit part 40 to output the reactive power corresponding to the reactive power command value Qop or the reactive power command value Qn and the determined active power. The drive circuit 54 supplies the determined active power and the determined reactive power from the major circuit part 40 to the electric power system 4 by the ON/OFF switching of the multiple switching elements of the major circuit part 40.

The measuring device 22 and the estimated value calculator 50 regularly acquire the active power value P, the reactive power value Q, and the voltage value Vs. Each time the active power value P, the reactive power value Q, and the voltage value Vs are acquired, the estimated value calculator 50 calculates (predicts) the estimated values ^R, ^X, and ^Vr and updates the current state from the predicted state and the information due to observation.

The reactive power calculator 52 calculates the reactive power command value Qop or the reactive power command value Qn each time the estimated values ^R, ^X, and ^Vr are input from the estimated value calculator 50. Each time the reactive power command value Qop or the reactive power command value Qn is input, the drive circuit 54 generates a control signal of the major circuit part 40 and supplies the active power and the reactive power from the major circuit part 40 to the electric power system 4. By repeating the processing recited above, the controller 42 dynamically supplies the active power corresponding to the distributed power source 6 to the electric power system 4 and supplies the reactive power corresponding to the reactive power command value Qop or the reactive power command value Qn to the electric power system 4.

Thus, by supplying the active power and the reactive power to the electric power system 4, the fluctuation of the voltage of the connection point LP due to the supply of the active power from the power conversion device 10 to the electric power system 4 and/or the effects of the consumer 16, the generator 18, etc., can be suppressed. For example, the fluctuation of the voltage value Vs of the connection point LP can be suppressed to be, for example, within ±2% of the voltage fluctuation range necessary for the designated value Vsr or the voltage value Vr of the infinite bus power system 3.

In the power conversion device 10, the estimated values ^R, ^X, and ^Vr are calculated using an extended Kalman filter (a Kalman filter applicable to a nonlinear equation). For example, compared to a method of estimating the system characteristics of the electric power system 4 using a linear approximation formula, the system characteristics of the electric power system 4 can be estimated more appropriately thereby.

For example, even when the placement location of the distributed power source 6 is distal and the resistance component R and the reactance component X of the system impedance are large, the system characteristics of the electric power system 4 can be estimated more appropriately; and the voltage fluctuation of the connection point LP can be suppressed.

Also, even when a load (the consumer 16) such as a plant or the like and/or another distributed power source (the generator 18) are directly proximal, the effects of the load and the other distributed power source can be estimated as the fluctuation of the system characteristics; and the corresponding reactive power can be supplied to the connection point LP. Accordingly, even when the load and/or the other distributed power source are directly proximal, the fluctuation of the voltage of the connection point LP of the distributed power source 6 can be suppressed more appropriately.

The calculation by the estimated value calculator 50 of the estimated values ^R, ^X, and ^Vr using the extended Kalman filter will now be described.

The voltage value Vs of the connection point LP can be represented by the nonlinear equation of the following Formula (1). The estimated values ^R, ^X, and ^Vr are calculated by applying the extended Kalman filter based on the nonlinear equation.

[Formula 1]

$$V_s = \sqrt{\frac{2\left(P\hat{R} + Q\hat{X}\right) + \hat{V_r}^2 + \sqrt{\left(2\left(P\hat{R} + Q\hat{X}\right) + \hat{V_r}^2\right)^2 - 4\left(P^2 + Q^2\right)\left(\hat{R}^2 + \hat{X}^2\right)}}{2}} \quad \cdots (1)$$

The state equation of the extended Kalman filter can be represented by the following Formula (2). Also, the output equation of the extended Kalman filter can be represented by the following Formula (3).

[Formula 2]

$$x_k = f(x_{k-1}) + w_{k-1} \quad \cdots (2)$$

[Formula 3]

$$z_k = h(x_k) + v_k \quad \cdots (3)$$

In Formula (2), x is a state vector having, as components, the resistance component R and the reactance component X of the system impedance of the electric power system 4 and the voltage value Vr of the infinite bus power system 3 as represented in the following Formula (4). In Formula (4), "T" represents the transpose.

[Formula 4]

$$x = [R, X, V_r]^T \quad \cdots (4)$$

In Formula (2), f is a nonlinear function of the state vector x. In Formula (2), w is a vector of the system noise. Also, in Formula (2) and Formula (3), the index "k" represents the time. In other words, the index "k" is the sequence of the data corresponding to the active power value P, the reactive power value Q, and the voltage value Vs which are acquired regularly. "k-1" represents the data one previous to "k". Accordingly, Formula (2) represents the estimation of the current state vector x from the state vector x of one previous. The index "k" is similar in the formulas recited below as well.

In Formula (3), z is the observed value of the voltage value Vs. In Formula (3), h is the nonlinear function of x.

Also, in Formula (3), *v* is the observation noise. Formula (3) represents the response of the observed value z to the state vector x. In the example, *h(x)* is the predicted voltage value Vs of the connection point LP (*h(x)* = *Vs*). In other words, the observed value z can be considered to be the observation noise v added to the voltage value Vs of the connection point LP. The observed value z is the measured value of the voltage value Vs from the measuring device 22.

The extended Kalman filter includes a predict step and an update step. In the predict step, the estimated value calculator 50 predicts the state vector x using the following Formula (5).
[Formula 5]

$$x_k^f = f(x_{k-1}^a) = x_{k-1}^a \cdot \cdot \cdot (5)$$

In Formula (5), $x^f$ represents the predicted value of the state vector x. $x^a$ represents the state vector x updated in the update step. Thus, in the example, the state vector $x^a$ after the update is used as the state vector $x^f$ after the prediction.

The estimated value calculator 50 calculates the components of the state vector $x^f$ after the prediction respectively as the estimated values ^R, ^X, and ^Vr. That is, in other words, the estimated values ^R, ^X, and ^Vr are the components of the state vector $x^a$ after the update. Also, the estimated value calculator 50 includes an initial value of the state vector x and uses the initial value as the state vector $x^f$ after the prediction in an initial state in which the update step is not performed. Based on the estimated values ^R, ^X, and ^Vr thus calculated, the controller 42 controls the operation of the major circuit part 40 as recited above.

The initial value of the state vector x may be a constant value; for example, when the distributed power source 6 is a solar panel, etc., the average value of one day's amount of the estimated values ^R, ^X, and ^Vr may be calculated; and the average values of the estimated values ^R, ^X, and ^Vr may be used as the initial value of the state vector x of the next day. The estimated value calculator 50 may have the function of calculating the average values in a prescribed period respectively of the estimated values ^R, ^X, and ^Vr and using the calculated average values of the estimated values ^R, ^X, and ^Vr as the initial value of the state vector x in the next prescribed period.

In the predict step, the estimated value calculator 50 predicts the state vector x and predicts a covariance matrix $P^f$ using the following Formula (6). The covariance matrix $P^f$ is an error covariance matrix of the state vector $x^f$ after the prediction considering the effects of the system noise w.
[Formula 6]

$$P_k^f = J_f(x_{k-1}^a)P_{k-1}J_f(x_{k-1}^a)^T + Q_{k-1} \cdot \cdot \cdot (6)$$

In Formula (6), $J_f(x)$ is a matrix defined by the Jacobian of the nonlinear function f, and in the example, is the diagonal matrix of (1, 1, 1) as represented in the following Formula (7).
[Formula 7]

$$J_f(x_{k-1}^a) = \frac{\partial f(x)}{\partial X} = diag.(1,1,1) \cdot \cdot \cdot (7)$$

In Formula (6), $P_{k-1}$ is the initial value of the covariance matrix or the covariance matrix of one previous. In Formula (6), $J_f(x)^T$ is the transposed matrix of the Jacobian matrix $J_f(x)$. Also, in Formula (6), $Q_{k-1}$ is the covariance matrix of the system noise w. The covariance matrix $Q_{k-1}$ of the system noise w is the expected value of the inner product of the system noise w and the transposed matrix of the system noise w as represented in the following Formula (8).
[Formula 8]

$$E[w_k w_k^T] = Q_k \cdot \cdot \cdot (8)$$

Based on the estimated values ^R, ^X, and ^Vr calculated in the predict step, the controller 42 operates the major circuit part 40 and acquires the active power value P, the reactive power value Q, and the voltage value Vs when operating the major circuit part 40. The estimated value calculator 50 performs the update step after the active power value P, the reactive power value Q, and the voltage value Vs are acquired. In the update step, the estimated value calculator 50 updates the state vector x based on the active power value P, the reactive power value Q, and the voltage value Vs that are acquired.

In the update step, first, the estimated value calculator 50 optimizes the Kalman gain for updating the state vector x based on the covariance matrix $P^f$ and the acquired measured values of the active power value P, the reactive power value Q, and the voltage value Vs. The Kalman gain is determined by the following Formula (9).

[Formula 9]

$$K_k = P_k^f J_h\left(x_k^f\right)^T \left[ J_h\left(x_k^f\right) P_k^f J_h\left(x_k^f\right)^T + R_k \right]^{-1} \quad \cdots \quad (9)$$

In Formula (9), $J_h(x)$ is a matrix defined by the Jacobian of the nonlinear function h. In the example, the nonlinear function $h(x)$ is the voltage value Vs of the connection point LP; therefore, $J_h(x)$ is represented by the following Formula (10).

[Formula 10]

$$J_h(x) = \frac{\partial h(x)}{\partial X} = \left( \frac{\partial V_s}{\partial R} \frac{\partial V_s}{\partial X} \frac{\partial V_s}{\partial V_r} \right) \quad \cdots \quad (10)$$

In Formula (10), $\partial Vs/\partial R$, $\partial Vs/\partial X$, and $\partial Vs/\partial V$ are represented respectively in the following Formula (11), Formula (12), and Formula (13) from Formula (1) recited above.

[Formula 11]

$$\frac{\partial V_s}{\partial R} = \frac{P}{V_s} + \frac{P}{2V_s\sqrt{B^2 - 4C}}\left(B - 2(R^2 + X^2)\right) \cdots (11)$$

[Formula 12]

$$\frac{\partial V_s}{\partial X} = \frac{Q}{V_s} + \frac{Q}{2V_s\sqrt{B^2 - 4C}}\left(B - 2(R^2 + X^2)\right) \cdots (12)$$

[Formula 13]

$$\frac{\partial V_s}{\partial V_r} = \frac{V_r}{V_s} + \frac{2V_r B}{4V_s\sqrt{B^2 - 4C}} \quad \cdots \quad (13)$$

In Formula (11), Formula (12), and Formula (13), $B$ is the following Formula (14); and C is the following Formula (15).

[Formula 14]

$$B = 2(RP + XQ) + V_r^2 \quad \cdots \quad (14)$$

[Formula 15]

$$C = (P^2 + Q^2)(R^2 + X^2) \cdot \cdot \cdot (15)$$

Also, in Formula (9) recited above, $J_h(x)^T$ is the transposed matrix of the Jacobian matrix $J_h(x)$. In Formula (9), $R_k$ is the covariance matrix of the observation noise v. A covariance matrix $R_k$ of the observation noise v is the expected value of the inner product of the observation noise v and the transposed matrix of the observation noise v as represented in the following Formula (16).

[Formula 16]

$$E\left[v_k v_k^T\right] = R_k \cdot \cdot \cdot (16)$$

In Formula (9), the portion of $[Jn(x)P^f J_h(x)^T + R_k]^{-1}$ is, in other words, the error covariance for the prediction error $(z - h(x^f))$.

In the update step, after the optimization of the Kalman gain is performed, the estimated value calculator 50 uses the Kalman gain to update the state vector x using the following Formula (17).

[Formula 17]

$$x_k^a = x_k^f + K_k\left(z_k - h\left(x_k^f\right)\right) \cdot \cdot \cdot (17)$$

In Formula (17), $h(x^f)$ is the predicted value of the voltage value Vs calculated from the state vector $x^f$ after the prediction using Formula (1). In other words, the estimated value calculator 50 determines the prediction error of the voltage value Vs of the connection point LP based on the measured value z of the voltage value Vs of the connection point LP and the predicted value $h(x^f)$ of the voltage value Vs of the connection point LP calculated using the state vector $x^f$ after the prediction. The estimated value calculator 50 determines the prediction error by subtracting the predicted value $h(x^f)$ from the measured value z.

The estimated value calculator 50 calculates a correction value of the state vector x by multiplying the prediction error by the Kalman gain, and determines the state vector $x^a$ after the update by adding the correction value to the state vector $x^f$ after the prediction. Thereby, the next state vector x can be predicted by considering the prediction error.

In the update step, the estimated value calculator 50 updates the state vector x and updates the covariance matrix P using the following Formula (18). As represented in Formula (18), the estimated value calculator 50 updates the covariance matrix P based on the optimized Kalman gain.

[Formula 18]

$$P_k = \left[I - K_k J_h\left(x_k^f\right)\right]P_k^f \cdot \cdot \cdot (18)$$

The estimated value calculator 50 repeatedly performs the predict step and the update step recited above. Thereby, the estimated values ^R, ^X, and ^Vr can be predicted using the extended Kalman filter; and the operation of the major circuit part 40 can be controlled based on the prediction. The fluctuation of the voltage value Vs of the connection point LP can be suppressed thereby. In Formula (18), $I$ is the identity matrix.

FIG. 3 is a block diagram schematically illustrating the estimated value calculator according to the embodiment.

As illustrated in FIG. 3, the estimated value calculator 50 includes a filter 60, a low-speed estimation calculator 62, a high-speed estimation calculator 64, a control circuit 66, and a switcher 68.

The filter 60 suppresses the noise of the active power value P, the reactive power value Q, and the voltage value Vs input from the measuring device 22. The filter 60 is, for example, a low-pass filter. Thereby, the filter 60 suppresses abrupt fluctuation of the active power value P, the reactive power value Q, and the voltage value Vs. The filter 60 is provided as necessary and is omissible.

As recited above, the low-speed estimation calculator 62 and the high-speed estimation calculator 64 calculate the estimated values ^R, ^X, and ^Vr from the active power value P, the reactive power value Q, and the voltage value Vs input via the filter 60 by using an extended Kalman filter.

The sampling rates of the active power value P, the reactive power value Q, and the voltage value Vs are different between the low-speed estimation calculator 62 and the high-speed estimation calculator 64. The sampling rate of the high-speed estimation calculator 64 is faster than the sampling rate of the low-speed estimation calculator 62.

The sampling rate of the low-speed estimation calculator 62 is, for example, about one time per 5 seconds (1 second to 10 seconds). The sampling rate of the high-speed estimation calculator 64 is, for example, about one time per 0.5 seconds (0.1 seconds to 1 second). The sampling rate of the high-speed estimation calculator 64 is, for example, about 10 times (not less than 5 times and not more than 15 times) the sampling rate of the low-speed estimation calculator 62.

For example, separate processors are used in the low-speed estimation calculator 62 and the high-speed estimation calculator 64. For example, a processor that has a faster arithmetic processing speed than the processor of the low-speed estimation calculator 62 is used as the processor of the high-speed estimation calculator 64.

For example, the low-speed estimation calculator 62 and the high-speed estimation calculator 64 may be configured using an operation mode having a fast arithmetic processing speed and an operation mode having a slow arithmetic processing speed in the same processor.

In the case where a processor having a fast arithmetic processing speed, an operation mode having a fast arithmetic processing speed, or the like is used, the power consumption is large compared to the case where a processor having a slow arithmetic processing speed, an operation mode having a slow arithmetic processing speed, or the like is used. The average power consumption when operating the high-speed estimation calculator 64 is greater than the average power consumption of when operating the low-speed estimation calculator 62.

Therefore, compared to when operating the high-speed estimation calculator 64, the power consumption can be reduced when operating the low-speed estimation calculator 62. On the other hand, compared to when operating the low-speed estimation calculator 62, the responsiveness to the fluctuation of the system characteristics can be increased when operating the high-speed estimation calculator 64.

The low-speed estimation calculator 62 and the high-speed estimation calculator 64 input the calculated estimated values ^R, ^X, and ^Vr to the switcher 68. The switcher 68 switches between the path inputting the estimated values ^R, ^X, and ^Vr input from the low-speed estimation calculator 62 to the reactive power calculator 52 and the path inputting the estimated values ^R, ^X, and ^Vr input from the high-speed estimation calculator 64 to the reactive power calculator 52. At this time, the switcher 68 suppresses the abrupt change of the estimated values ^R, ^X, and ^Vr when switching the paths.

For example, when switching from the path of the low-speed estimation calculator 62 to the path of the high-speed estimation calculator 64, the switcher 68 maintains the values of the estimated values ^R, ^X, and ^Vr input from the low-speed estimation calculator 62 until the estimated values ^R, ^X, and ^Vr are input from the high-speed estimation calculator 64. The switcher 68 performs a so-called bumpless control. In other words, the switcher 68 is a bumpless switch. Thereby, the undesirable input to the reactive power calculator 52 of unstable estimated values ^R, ^X, and ^Vr at the timing of switching the paths can be suppressed.

The switcher 68 is provided as necessary and is omissible. It is sufficient for the estimated value calculator 50 to include at least the low-speed estimation calculator 62, the high-speed estimation calculator 64, and the control circuit 66.

The control circuit 66 controls the switching of the low-speed estimation calculator 62 and the high-speed estimation calculator 64. The control circuit 66 stops the operation of the high-speed estimation calculator 64 when operating the low-speed estimation calculator 62. Also, the control circuit 66 stops the operation of the low-speed estimation calculator 62 when operating the high-speed estimation calculator 64. Thus, the control circuit 66 selectively operates only one of the low-speed estimation calculator 62 or the high-speed estimation calculator 64.

The control circuit 66 is connected to the low-speed estimation calculator 62 and the high-speed estimation calculator 64, controls the switching of the low-speed estimation calculator 62 and the high-speed estimation calculator 64, and communicates with the low-speed estimation calculator 62 or the high-speed estimation calculator 64 when operating.

When operating, the low-speed estimation calculator 62 and the high-speed estimation calculator 64 input the calculated estimated values ^R, ^X, and ^Vr to the switcher 68 and to the control circuit 66. Also, the low-speed estimation calculator 62 and the high-speed estimation calculator 64 input, to the control circuit 66, the prediction error ($z - h(x^f)$) of the voltage value Vs of the connection point LP determined in the update step. Also, the high-speed estimation calculator 64 inputs a covariance matrix $P_k$ determined in the update step to the control circuit 66. Hereinbelow, the prediction error of the voltage value Vs of the low-speed estimation calculator 62 is called *ErrS*; and the prediction error of the voltage value Vs of the high-speed estimation calculator 64 is called *ErrF*.

In the state of stopping the operation of the high-speed estimation calculator 64 and operating the low-speed estimation calculator 62, the control circuit 66 determines whether or not the absolute value Abs(*ErrS*) of the prediction error ErrS input from the low-speed estimation calculator 62 is greater than a first threshold abe1 (*Abs(ErrS) > abe1*).

When determining the absolute value Abs(*ErrS*) of the prediction error ErrS to be not more than the first threshold abel, the control circuit 66 continues the operation of the low-speed estimation calculator 62. On the other hand, when determining the absolute value Abs(*ErrS*) of the prediction error ErrS to be greater than the first threshold abel, the control circuit 66 stops the operation of the low-speed estimation calculator 62 and starts the operation of the high-speed estimation calculator 64.

When starting the operation of the high-speed estimation calculator 64, the control circuit 66 inputs the estimated values ^R, ^X, and ^Vr input from the low-speed estimation calculator 62 to the high-speed estimation calculator 64. The high-speed estimation calculator 64 sets the estimated values ^R, ^X, and ^Vr input from the control circuit 66 as the initial value of the estimated values ^R, ^X, and ^Vr and calculates using the extended Kalman filter.

Also, when starting the operation, the high-speed estimation calculator 64 sets the covariance matrix $P_{k-1}$ to the initial value. The initial value of the covariance matrix $P_{k-1}$ is, for example, a covariance matrix having a relatively large value such as diag(200, 200, 200), etc. Thereby, the convergence of the covariance matrix $P_{k-1}$ can be faster even when the system characteristics change, etc.

The control circuit 66 determines whether or not the absolute value Abs(*ErrF*) of the prediction error ErrF input from the high-speed estimation calculator 64 in the state of stopping the operation of the low-speed estimation calculator 62 and operating the high-speed estimation calculator 64 is less than a second threshold abe2 (*Abs(ErrF) < abe2*). The second threshold abe2 is set to a value less than the first threshold abe1. For example, the second threshold abe2 is set to about 1/2 of the first threshold abe1 (*abe2 = abe1/2*). However, the value of the second threshold abe2 may be any value less than the first threshold abe1.

When the absolute value Abs(*ErrF*) of the prediction error ErrF is determined to be not less than the second threshold abe2, the control circuit 66 continues the operation of the high-speed estimation calculator 64. On the other hand, when the absolute value Abs(*ErrF*) of the prediction error ErrF is determined to be less than the second threshold abe2, the control circuit 66 stops the operation of the high-speed estimation calculator 64 and starts the operation of the low-speed estimation calculator 62.

When starting the operation of the low-speed estimation calculator 62, the control circuit 66 inputs, to the low-speed estimation calculator 62, the covariance matrix $P_k$ and the estimated values ^R, ^X, and ^Vr input from the high-speed estimation calculator 64. The low-speed estimation calculator 62 sets the estimated values ^R, ^X, and ^Vr input from the control circuit 66 as the initial value of the estimated values ^R, ^X, and ^Vr, sets the covariance matrix $P_k$ input from the control circuit 66 as the initial value of the covariance matrix $P_k$, and performs the calculation using the extended Kalman filter. Thereby, in the low-speed estimation calculator 62, the calculation can be started from a state in which the covariance matrix $P_k$ is converged due to the calculation by the high-speed estimation calculator 64.

Thus, the control circuit 66 operates the low-speed estimation calculator 62 in the steady state in which the fluctuation of the prediction error of the voltage value Vs is small. Thereby, in the steady state, the calculation load can be reduced; and the power consumption can be reduced. Also, the control circuit 66 operates the high-speed estimation calculator 64 in a transient state in which the fluctuation of the prediction error of the voltage value Vs is large. Thereby, the responsiveness to the fluctuation of the system characteristics, etc., can be increased; and the voltage fluctuation of the connection point LP can be suppressed more appropriately.

Thus, in the power conversion device 10, the estimated value calculator 50 includes the low-speed estimation calculator 62 and the high-speed estimation calculator 64. The high-speed estimation calculator 64 is operated when the system characteristics fluctuate severely due to the directly proximal load fluctuation and/or the output fluctuation of directly proximal power sources, the output fluctuation of many connected power sources, and the effects of a transformer tap change due to control factors on the system operation side, SVC control, AVR control, etc. Thereby, the voltage fluctuation of the connection point LP of the distributed power source 6 can be suppressed more appropriately even when the fluctuation of the system characteristics is severe. Then, the low-speed estimation calculator 62 is operated when the fluctuation of the system characteristics is small. Thereby, compared to the case where the calculation is performed by only the high-speed estimation calculator 64, the increase of the power consumption of the power conversion device 10 can be suppressed.

As recited above, the sampling rate of the high-speed estimation calculator 64 is set to be about 10 times the sampling rate of the low-speed estimation calculator 62. Thereby, the increase of the power consumption can be suppressed appropriately by the low-speed estimation calculator 62; and the voltage fluctuation of the connection point LP can be suppressed appropriately by the high-speed estimation calculator 64 even when the fluctuation of the system characteristics is severe.

The calculation of the reactive power command value Qop and the reactive power command value Qn by the reactive power calculator 52 will now be described.

FIG. 4 is a graph schematically illustrating an example of the operation of the reactive power calculator.

The horizontal axis of FIG. 4 is the reactive power value Q of the connection point LP; and the vertical axis of FIG. 4 is the voltage value Vs of the connection point LP. FIG. 4 schematically illustrates an example of the operation of the reactive power calculator of when the reactive power command value Qn is calculated.

When calculating the reactive power command value Qn, the reactive power calculator 52 calculates a slope K with respect to the reactive power value Q of the voltage value Vs as illustrated in FIG. 4 based on the calculation result of the estimated value calculator 50 according to the input of the estimated values ^R, ^X, and ^Vr, the active power value P, the reactive power value Q, and the voltage value Vs from the estimated value calculator 50. The reactive power calculator 52 calculates the slope K using the following Formula (19). In Formula (19), *B* is from Formula (14), and *C* is from Formula (15).
[Formula 19]

$$\frac{\partial V_s}{\partial Q} = K = \frac{X}{V_s} + \frac{1}{2V_s\sqrt{B^2 - 4C}}\left(BX - 2Q(R^2 + X^2)\right) \cdot \cdot \cdot (19)$$

The voltage value $Vs_{(n)}$ of the connection point LP of the next time can be represented by the following Formula (20), in which the voltage value of the connection point LP of the next time is $Vs_{(n)}$, the voltage value of the connection point LP of the previous time measured by the measuring device 22 is $Vs_{(n-1)}$, the reactive power value of the connection point LP of the next time is $Q_n$, and the reactive power value of the connection point LP of the previous time measured by the measuring device 22 is *Qn-1*.
[Formula 20]

$$V_{s(n)} = V_{s(n-1)} + K(Q_n - Q_{n-1}) \cdot \cdot \cdot (20)$$

Accordingly, the reactive power value $Q_n$ of the connection point LP of the next time can be represented by the following Formula (21), in which the voltage value $Vs_{(n)}$ of the connection point LP of the next time is the designated value Vsr.
[Formula 21]

$$Q_n = Q_{n-1} + K^{-1}\left(V_{sr} - V_{s(n-1)}\right) \cdot \cdot \cdot (21)$$

Thus, the reactive power calculator 52 calculates the slope K based on the values input from the estimated value calculator 50, calculates the reactive power value $Q_n$ of the connection point LP of the next time, and calculates the reactive power value $Q_n$ of the connection point LP of the next time as the reactive power command value Qn.
On the other hand, when calculating the reactive power command value Qop, the reactive power calculator 52 calculates the reactive power command value Qop from the estimated values ^R, ^X, and ^Vr using the following Formula (22).
[Formula 22]

$$Q_{op} = \frac{\hat{X}\hat{V_r}^2}{\hat{R}^2 + \hat{X}^2} - \text{sign}(\hat{X})\sqrt{\left(\frac{\hat{X}\hat{V_r}^2}{\hat{R}^2 + \hat{X}^2}\right) - P^2 + 2P\frac{\hat{R}\hat{V_r}^2}{\hat{R}^2 + \hat{X}^2}} \cdot \cdot \cdot (22)$$

In Formula (22), "sign" is the sign function.
FIG. 5 is a graph schematically illustrating an example of the operation of the distributed power source system according to the embodiment.
The power conversion device 10 includes a controllable range in which the power factor is controllable. The controllable range of the power factor of the power conversion device 10 is, for example, the range of ±0.85 or more. In other words, both the lagging power factor and the leading power factor are in the range not less than 0.85 and not more than 1.00.
Therefore, as illustrated in FIG. 5, for the voltage value Vs of the connection point LP as well, the power conversion device 10 includes a controllable range which is controllable and an uncontrollable range which is uncontrollable. FIG. 5 schematically illustrates an example of the controllable range of the voltage value Vs in the case where R = 0.1 (pu), X = 0.2 (pu), Vr = 1 (pu), and the controllable range of the power factor is set to ±0.85 or more.
When the calculated reactive power command value Qop or reactive power command value Qn exceeds the controllable range in the result of calculating the reactive power command value Qop or the reactive power command value Qn, the reactive power calculator 52 sets the maximum or the minimum reactive power value within the controllable range as the reactive power command value Qop or the reactive power command value Qn.

FIG. 6A and FIG. 6B are graphs schematically illustrating an example of the operation of the distributed power source system according to the embodiment.

FIG. 6A schematically illustrates an example of an active power Ppf1 in the case where a constant power factor control is performed and an example of an active power Ppf2 in the case where an estimation using an extended Kalman filter is performed.

FIG. 6B schematically illustrates an example of a reactive power Qpf1 in the case where the constant power factor control is performed and an example of a reactive power Qpf2 in the case where an estimation using an extended Kalman filter is performed.

As illustrated in FIG. 6A and FIG. 6B, in the case where the estimation using the extended Kalman filter is performed, compared to the case where the constant power factor control is performed, the reactive power can be small; and the power factor can be improved. Accordingly, the active power can be supplied more efficiently from the distributed power source 6 to the electric power system 4. For example, the profit from selling the electrical power of the owner of the distributed power source 6 can be increased.

Thus, in the distributed power source system 2 and the power conversion device 10 according to the embodiment, by supplying the appropriate reactive power to the connection point LP, the fluctuation of the voltage Vs of the connection point LP can be suppressed more appropriately; the power factor of the output alternating current power can be improved; and the active power can be supplied to the electric power system 4 more efficiently.

**Claims**

1. A power conversion device (10) configured to connect a distributed power source (6) to an electric power system (4) by converting electrical power of the distributed power source (6) into alternating current power corresponding to the electric power system (4) and by supplying the alternating current power after the converting to the electric power system (4), the electric power system (4) being connected to an infinite bus power system (3),

   the power conversion device (10) comprising:

       a major circuit part (40) configured to convert the electrical power of the distributed power source (6) into the alternating current power corresponding to the electric power system (4); and
       a controller (42) configured to control an operation of the major circuit part (40),

   the controller (42) including:

       an estimated value calculator (50) configured to calculate an estimated value of a resistance component of a system impedance of the electric power system (4), an estimated value of a reactance component of the system impedance, and an estimated value of a voltage value of the infinite bus power system (3) based on an active power value of a connection point (LP) to the electric power system (4), a reactive power value of the connection point (LP), and a voltage value of the connection point (LP) by using a Kalman filter applicable to a nonlinear equation;
       a reactive power calculator (52) configured to calculate a reactive power command value of reactive power supplied to the electric power system (4) based on the estimated value of the resistance component of the system impedance, the estimated value of the reactance component of the system impedance, and the estimated value of the voltage value of the infinite bus power system (3); and
       a drive circuit (54) configured to drive the major circuit part (40) to output a prescribed active power and reactive power corresponding to the reactive power command value,

   **characterized in that**
   the estimated value calculator (50) includes:

       a low-speed estimation calculator (62) configured to calculate the estimated value of the resistance component of the system impedance, the estimated value of the reactance component of the system impedance, and the estimated value of the voltage value of the infinite bus power system (3);
       a high-speed estimation calculator (64) configured to calculate the estimated value of the resistance component of the system impedance, the estimated value of the reactance component of the system impedance, and the estimated value of the voltage value of the infinite bus power system (3) by sampling the active power value, the reactive power value, and the voltage value of the connection point (LP) at a faster sampling rate than the low-speed estimation calculator (62); and
a control circuit (66) configured to selectively operate only one of the low-speed estimation calculator (62) or the high-speed estimation calculator (64) by controlling a switching of the low-speed estimation calculator (62) and the high-speed estimation calculator (64),

the low-speed estimation calculator (62) and the high-speed estimation calculator (64) being configured to calculate a predicted value of the voltage value of the connection point (LP) based on the estimated value of the resistance component of the system impedance, the estimated value of the reactance component of the system impedance, and the estimated value of the voltage value of the infinite bus power system (3) and to determine a prediction error of the voltage value of the connection point (LP) based on a measured value of the voltage value of the connection point (LP) and the predicted value of the voltage value of the connection point (LP),
the control circuit (66) being configured:

to stop the operation of the low-speed estimation calculator (62) and start the operation of the high-speed estimation calculator (64) when an absolute value of the prediction error input from the low-speed estimation calculator (62) in a state of stopping the operation of the high-speed estimation calculator (64) and operating the low-speed estimation calculator (62) is greater than a first threshold; and
to stop the operation of the high-speed estimation calculator (64) and to start the operation of the low-speed estimation calculator (62) when the absolute value of the prediction error input from the high-speed estimation calculator (64) in a state of stopping the operation of the low-speed estimation calculator (62) and operating the high-speed estimation calculator (64) is less than a second threshold less than the first threshold.

2. The power conversion device (10) according to claim 1, wherein the low-speed estimation calculator (62) and the high-speed estimation calculator (64) are configured to use an extended Kalman filter as the Kalman filter applicable to the nonlinear equation.

3. The power conversion device (10) according to claim 2, wherein

the low-speed estimation calculator (62) and the high-speed estimation calculator (64) are configured to predict a state vector having the resistance component of the system impedance, the reactance component of the system impedance, and the voltage value of the infinite bus power system (3) as components, and to calculate the components of the state vector after the predicting respectively as the estimated value of the resistance component of the system impedance of the electric power system (4), the estimated value of the reactance component of the system impedance, and the estimated value of the voltage value of the infinite bus power system (3),
the controller (42) is configured to operate the major circuit part (40) based on the calculated estimated values and to acquire the active power value, the reactive power value, and the voltage value of the connection point (LP) when operating the major circuit part (40), and
the low-speed estimation calculator (62) and the high-speed estimation calculator (64) are configured to update the state vector based on the acquired active power value, the acquired reactive power value, and the acquired voltage value of the connection point (LP).

4. The power conversion device (10) according to claim 3, wherein the low-speed estimation calculator (62) and the high-speed estimation calculator (64) are configured to use the state vector after the updating as the state vector after the predicting.

5. The power conversion device (10) according to claim 3 or 4, wherein
the low-speed estimation calculator (62) and the high-speed estimation calculator (64) are configured:

to predict the state vector and to predict a covariance matrix relating to an error of the state vector after the predicting;
after acquiring measured values of the active power value, the reactive power value, and the voltage value of the connection point (LP), to optimize a Kalman gain for updating the state vector based on the covariance matrix and the acquired measured values;

to determine a prediction error of the voltage value of the connection point (LP) based on the measured value of the voltage value of the connection point (LP) and the predicted value of the voltage value of the connection point (LP) calculated using the state vector after the predicting; and
to update the state vector based on the prediction error and the optimized Kalman gain and to update the covariance matrix based on the optimized Kalman gain.

6. The power conversion device (10) according to claim 5, wherein the high-speed estimation calculator (64) is configured to set the covariance matrix to an initial value when starting the operation.

7. The power conversion device (10) according to claim 5 or 6, wherein

the high-speed estimation calculator (64) is configured to input the determined covariance matrix to the control circuit (66),
the control circuit (66) is configured to input, to the low-speed estimation calculator (62), the covariance matrix input from the high-speed estimation calculator (64) when starting the operation of the low-speed estimation calculator (62), and
the low-speed estimation calculator (62) is configured to set the covariance matrix input from the control circuit (66) to an initial value of the covariance matrix.

8. The power conversion device (10) according to any one of claims 3 to 7, wherein

the low-speed estimation calculator (62) and the high-speed estimation calculator (64) are configured to input, to the control circuit (66), the calculated estimated value of the resistance component of the system impedance, the calculated estimated value of the reactance component of the system impedance, and the calculated estimated value of the voltage value of the infinite bus power system (3),
the control circuit (66) is configured:

to input, to the low-speed estimation calculator (62), the estimated value of the resistance component of the system impedance, the estimated value of the reactance component of the system impedance, and the estimated value of the voltage value of the infinite bus power system (3) input from the high-speed estimation calculator (64) when starting the operation of the low-speed estimation calculator (62); and
to input, to the high-speed estimation calculator (64), the estimated value of the resistance component of the system impedance, the estimated value of the reactance component of the system impedance, and the estimated value of the voltage value of the infinite bus power system (3) input from the low-speed estimation calculator (62) when starting the operation of the high-speed estimation calculator (64), and

when starting the operation, the low-speed estimation calculator (62) and the high-speed estimation calculator (64) are configured to set the estimated value of the resistance component of the system impedance, the estimated value of the reactance component of the system impedance, and the estimated value of the voltage value of the infinite bus power system (3) input from the control circuit (66) as initial values of the estimated value of the resistance component of the system impedance, the estimated value of the reactance component of the system impedance, and the estimated value of the voltage value of the infinite bus power system (3).

9. The power conversion device (10) according to any one of claims 1 to 8, wherein

the reactive power calculator (52) is configured to receive an input of a designated value of a voltage of the connection point (LP), and
the reactive power calculator (52) is configured to be able to switch between calculating the reactive power command value to cause the voltage value of the connection point (LP) to approach the voltage value of the infinite bus power system (3) and calculating the reactive power command value to cause the voltage value of the connection point (LP) to approach the designated value.

10. A distributed power source system (2), comprising:

a distributed power source (6); and
the power conversion device (10) according to any one of claims 1 to 9 configured to connect the distributed power source (6) to an electric power system (4) by converting electrical power of the distributed power source (6) into alternating current power corresponding to the electric power system (4) and by supplying the alternating current power after the converting to the electric power system (4).

**Patentansprüche**

1. Leistungsumwandlungsvorrichtung (10), die konfiguriert ist, eine verteilte Leistungsquelle (6) mit einem elektrischen Leistungssystem (4) zu verbinden, indem elektrische Leistung der verteilten Leistungsquelle (6) in Wechselstromleistung, die dem elektrischen Leistungssystem (4) entspricht, umgewandelt wird und die Wechselstromleistung nach dem Umwandeln dem elektrischen Leistungssystem (4) zugeführt wird, wobei das elektrische Leistungssystem (4) mit einem unendlichen Busleistungssystem (3) verbunden ist,

    wobei die Leistungsumwandlungsvorrichtung (10) aufweist:

    einen Hauptschaltungsteil (40), der konfiguriert ist, die elektrische Leistung der verteilten Leistungsquelle (6) in die Wechselstromleistung umzuwandeln, die dem elektrischen Leistungssystem (4) entspricht, und eine Steuerungseinrichtung (42), die konfiguriert ist, einen Betrieb des Hauptschaltungsteils (40) zu steuern,

    wobei die Steuerungseinrichtung (42) aufweist:

    eine Schätzwertberechnungseinrichtung (50), die konfiguriert ist, einen geschätzten Wert einer Widerstandskomponente einer Systemimpedanz des elektrischen Leistungssystems (4), einen geschätzten Wert einer Reaktanzkomponente der Systemimpedanz und einen geschätzten Wert eines Spannungswerts des unendlichen Busleistungssystems (3) auf der Grundlage eines Wirkleistungswerts eines Verbindungspunkts (LP) mit dem elektrischen Leistungssystem (4), eines Blindleistungswerts des Verbindungspunkts (LP) und eines Spannungswerts des Verbindungspunkts (LP) durch Verwendung eines Kalman-Filters zu schätzen, das bei einer nichtlinearen Gleichung anwendbar ist,
    eine Blindleistungsberechnungseinrichtung (52), die konfiguriert ist, einen Blindleistungsbefehlswert von elektrischer Leistung, die dem elektrischen Leistungssystem (4) zugeführt wird, auf der Grundlage des geschätzten Werts der Widerstandskomponente der Systemimpedanz, des geschätzten Werts der Reaktanzkomponente der Systemimpedanz und des geschätzten Werts des unendlichen Busleistungssystems (3) zu berechnen, und
    eine Ansteuerungsschaltung (54), die konfiguriert ist, den Hauptschaltungsteil (40) zur Ausgabe einer vorgegebenen Wirkleistung und einer Blindleistung entsprechend dem Blindleistungsbefehlswert anzusteuern,

    **dadurch gekennzeichnet, dass**
    die Schätzwertberechnungseinrichtung (50) aufweist:

    eine Niedriggeschwindigkeits-Schätzungsberechnungseinrichtung (62), die konfiguriert ist, den geschätzten Wert der Widerstandskomponente der Systemimpedanz, den geschätzten Wert der Reaktanzkomponente der Systemimpedanz und den geschätzten Wert des Spannungswerts des unendlichen Busleistungssystems (3) zu berechnen,
    eine Hochgeschwindigkeits-Schätzungsberechnungseinrichtung (62), die konfiguriert ist, den geschätzten Wert der Widerstandskomponente der Systemimpedanz, den geschätzten Wert der Reaktanzkomponente der Systemimpedanz und den geschätzten Wert des Spannungswerts des unendlichen Busleistungssystems (3) durch Abtasten des Wirkleistungswerts, des Blindleistungswerts und des Spannungswerts des Verbindungspunkts (LP) bei einer schnelleren Abtastrate als die Niedriggeschwindigkeits-Schätzungsberechnungseinrichtung (62) zu berechnen, und
    eine Steuerungsschaltung (66), die konfiguriert ist, selektiv lediglich eine der Niedriggeschwindigkeits-Schätzungsberechnungseinrichtung (62) und der Hochgeschwindigkeits-Schätzungsberechnungseinrichtung (64) durch Steuern eines Schaltens der Niedriggeschwindigkeits-Schätzungsberechnungseinrichtung (62) und der Hochgeschwindigkeits-Schätzungsberechnungseinrichtung (64) zu betreiben,

    wobei die Niedriggeschwindigkeits-Schätzungsberechnungseinrichtung (62) und die Hochgeschwindigkeits-Schätzungsberechnungseinrichtung (64) konfiguriert sind, eine vorhergesagten Wert des Spannungswerts des Verbindungspunkts (LP) auf der Grundlage des geschätzten Werts der Widerstandskomponente der Systemimpedanz, des geschätzten Werts der Reaktanzkomponente der Systemimpedanz und des geschätzten Werts des Spannungswerts des unendlichen Busleistungssystems (3) zu berechnen und einen Vorhersagefehler des Spannungswerts des Verbindungspunkts (LP) auf der Grundlage eines gemessen Werts des Spannungswerts des Verbindungspunkts (LP) und des vorhergesagten Werts des Spannungswerts des Verbindungspunkts (LP) zu bestimmen,

wobei die Steuerungsschaltung (66) konfiguriert ist,

den Betrieb der Niedriggeschwindigkeits-Schätzungsberechnungseinrichtung (62) zu stoppen und den Betrieb der Hochgeschwindigkeits-Schätzungsberechnungseinrichtung (64) zu starten, wenn ein absoluter Fehler des Vorhersagefehlers, der aus der Niedriggeschwindigkeits-Schätzungsberechnungseinrichtung (62) in einem Zustand, in dem der Betrieb der Hochgeschwindigkeits-Schätzungsberechnungseinrichtung (64) gestoppt ist und die Niedriggeschwindigkeits-Schätzungsberechnungseinrichtung (62) betrieben wird, größer als ein erster Schwellenwert ist, und

den Betrieb der Hochgeschwindigkeits-Schätzungsberechnungseinrichtung (64) zu stoppen und den Betrieb der Niedriggeschwindigkeits-Schätzungsberechnungseinrichtung (62) zu starten, wenn der absolute Fehler des Vorhersagefehlers, der aus der Hochgeschwindigkeits-Schätzungsberechnungseinrichtung (64) in einem Zustand, in dem der Betrieb der Niedriggeschwindigkeits-Schätzungsberechnungseinrichtung (62) gestoppt ist und die Hochgeschwindigkeits-Schätzungsberechnungseinrichtung (64) betrieben wird, kleiner als ein zweiter Schwellenwert ist, der kleiner als der erste Schwellenwert ist.

2. Leistungsumwandlungsvorrichtung (10) nach Anspruch 1, wobei die Niedriggeschwindigkeits-Schätzungsberechnungseinrichtung (62) und die Hochgeschwindigkeits-Schätzungsberechnungseinrichtung (64) konfiguriert sind, ein erweitertes Kalman-Filter als das Kalman-Filter, das bei einer nichtlinearen Gleichung anwendbar ist, zu verwenden.

3. Leistungsumwandlungsvorrichtung (10) nach Anspruch 2, wobei

die Niedriggeschwindigkeits-Schätzungsberechnungseinrichtung (62) und die Hochgeschwindigkeits-Schätzungsberechnungseinrichtung (64) konfiguriert sind, einen Zustandsvektor vorherzusagen, der die Widerstandskomponente der Systemimpedanz, die Reaktanzkomponente der Systemimpedanz und den Spannungswert des unendlichen Busleistungssystems (3) als Komponenten aufweist, und die Komponenten des Zustandsvektors nach dem Vorhersagen jeweils als den geschätzten Wert der Widerstandskomponente der Systemimpedanz des elektrischen Leistungssystems (4), den geschätzte Wert der Systemimpedanz und den geschätzte Wert des Spannungswerts des unendlichen Bussystems zu berechnen,

die Steuerungseinrichtung (42) konfiguriert ist, den Hauptschaltungsteil (40) auf der Grundlage der geschätzten Werte zu betreiben und den Wirkleistungswert, den Blindleistungswert und den Spannungswert des Verbindungspunkts (LP) bei Betrieb des Hauptschaltungsteils (40) zu beschaffen, und

die Niedriggeschwindigkeits-Schätzungsberechnungseinrichtung (62) und die Hochgeschwindigkeits-Schätzungsberechnungseinrichtung (64) konfiguriert sind, den Zustandsvektor auf der Grundlage des beschafften Wirkleistungswerts, des beschafften Blindleistungswerts und des beschafften Spannungswerts des Verbindungspunkts (LP) zu aktualisieren.

4. Leistungsumwandlungsvorrichtung (10) nach Anspruch 3 oder 4, wobei die Niedriggeschwindigkeits-Schätzungsberechnungseinrichtung (62) und die Hochgeschwindigkeits-Schätzungsberechnungseinrichtung (64) konfiguriert sind, den Zustandsvektor nach Aktualisieren des Zustandsvektors nach der Vorhersage zu verwenden.

5. Leistungsumwandlungsvorrichtung (10) nach Anspruch 3 oder 4, wobei

die Niedriggeschwindigkeits-Schätzungsberechnungseinrichtung (62) und die Hochgeschwindigkeits-Schätzungsberechnungseinrichtung (64) konfiguriert sind,

den Zustandsvektor vorherzusagen und eine Kovarianzmatrix in Bezug auf einen Fehler des Zustandsvektors nach der Vorhersage vorherzusagen,

nach Beschaffen von Messwerten des Wirkleistungswerts, des Blindleistungswerts und des Spannungswerts des Verbindungspunkts (LP) eine Kalman-Verstärkung zum Aktualisieren des Zustandsvektors auf der Grundlage der Kovarianzmatrix und der beschafften Messwerte zu optimieren,

einen Vorhersagefehler des Spannungswerts des Verbindungspunkts (LP) auf der Grundlage des Messwerts des Spannungswerts des Verbindungspunkts (LP) und des vorhergesagten Werts des Spannungswerts des Verbindungspunkts (LP), der unter Verwendung des Zustandsvektors nach der Vorhersage berechnet wird, zu bestimmen, und

den Zustandsvektor auf der Grundlage des Vorhersagefehlers und der optimierten Kalman-Verstärkung zu aktualisieren und die Kovarianzmatrix auf der Grundlage der optimierten Kalman-Verstärkung zu aktualisieren.

6. Leistungsumwandlungsvorrichtung (10) nach Anspruch 5, wobei die Hochgeschwindigkeits-Schätzungsberechnungseinrichtung (64) konfiguriert ist, bei Start des Betriebs die Kovarianzmatrix auf einen anfänglichen Wert einzustellen.

7. Leistungsumwandlungsvorrichtung (10) nach Anspruch 5 oder 6, wobei

die Hochgeschwindigkeits-Schätzungsberechnungseinrichtung (64) konfiguriert ist, die bestimmte Kovarianzmatrix in die Steuerungsschaltung (66) einzugeben,
die Steuerungsschaltung (66) konfiguriert ist, bei Start des Betriebs der Niedriggeschwindigkeits-Schätzungsberechnungseinrichtung (62) die aus der Hochgeschwindigkeits-Schätzungsberechnungseinrichtung (64) eingegebene Kovarianzmatrix in die Niedriggeschwindigkeits-Schätzungsberechnungseinrichtung (62) einzugeben, und
die Niedriggeschwindigkeits-Schätzungsberechnungseinrichtung (62) konfiguriert ist, die aus der Steuerungsschaltung (66) eingegebene Kovarianzmatrix auf einen anfänglichen Wert der Kovarianzmatrix einzustellen.

8. Leistungsumwandlungsvorrichtung (10) nach einem der Ansprüche 3 bis 7, wobei

die Niedriggeschwindigkeits-Schätzungsberechnungseinrichtung (62) und die Hochgeschwindigkeits-Schätzungsberechnungseinrichtung (64) konfiguriert sind, in die Steuerungsschaltung (66) den berechneten geschätzten Wert der Widerstandskomponente der Systemimpedanz, den berechneten geschätzten Wert der Reaktanzkomponente der Systemimpedanz und den berechneten geschätzten Wert des Spannungswerts des unendlichen Busleistungssystems (3) einzugeben,
die Steuerungsschaltung (66) konfiguriert ist,

bei Start der Niedriggeschwindigkeits-Schätzungsberechnungseinrichtung (62) den geschätzten Wert der Widerstandskomponente der Systemimpedanz, den geschätzten Wert der Reaktanzkomponente der Systemimpedanz und den geschätzten Wert des Spannungswerts des unendlichen Busleistungssystems (3), die aus der Hochgeschwindigkeits-Schätzungsberechnungseinrichtung (64) eingegeben worden sind, in die Niedriggeschwindigkeits-Schätzungsberechnungseinrichtung (62) einzugeben,
bei Start der Hochgeschwindigkeits-Schätzungsberechnungseinrichtung (64) den geschätzten Wert der Widerstandskomponente der Systemimpedanz, den geschätzten Wert der Reaktanzkomponente der Systemimpedanz und den geschätzten Wert des Spannungswerts des unendlichen Busleistungssystems (3), die aus der Niedriggeschwindigkeits-Schätzungsberechnungseinrichtung (62) eingegeben worden sind, in die Hochgeschwindigkeits-Schätzungsberechnungseinrichtung (64) einzugeben, und

die Niedriggeschwindigkeits-Schätzungsberechnungseinrichtung (62) und die Hochgeschwindigkeits-Schätzungsberechnungseinrichtung (64) konfiguriert sind, bei Start des Betriebs den geschätzten Wert der Widerstandskomponente der Systemimpedanz, den geschätzten Wert der Reaktanzkomponente der Systemimpedanz und den geschätzten Wert des Spannungswerts des unendlichen Busleistungssystems (3), die aus der Steuerungsschaltung (66) eingegeben worden sind, als anfängliche Werte des geschätzten Werts der Widerstandskomponente der Systemimpedanz, des geschätzten Werts der Reaktanzkomponente der Systemimpedanz und des geschätzten Werts des Spannungswerts des unendlichen Busleistungssystems (3) einzustellen.

9. Leistungsumwandlungsvorrichtung (10) nach einem der Ansprüche 1 bis 8, wobei

die Blindleistungsberechnungseinrichtung (52) konfiguriert ist, eine Eingabe eines festgelegten Werts einer Spannung des Verbindungspunkts (LP) zu empfangen, und
die Blindleistungsberechnungseinrichtung (52) konfiguriert ist, in der Lage zu sein, zwischen einer Berechnung des Blindleistungsbefehlswerts zum Bewirken, dass der Spannungswert des Verbindungspunkts (LP) sich dem Spannungswert des unendlichen Busleistungssystems (3) annähert, und einer Berechnung des Blindleistungsbefehlswerts zum Bewirken, dass der Spannungswert des Verbindungspunkts (LP) sich dem festgelegten Wert annähert, umzuschalten.

10. Verteiltes Leistungsquellensystem (2) mit:

einer verteilten Leistungsquelle (6) und
der Leistungsumwandlungsvorrichtung (10) nach einem der Ansprüche 1 bis 9, die konfiguriert ist, die verteilte Leistungsquelle (6) mit einem elektrischen Leistungssystem (4) zu verbinden, indem elektrische Leistung der verteilten Leistungsquelle (6) in Wechselstromleistung, die dem elektrischen Leistungssystem (4) entspricht, umgewandelt wird, und die Wechselstromleistung nach der Umwandlung dem elektrischen Leistungssystem (4) zugeführt wird.

**Revendications**

1. Dispositif de conversion d'énergie (10) configuré pour relier une source distribuée d'énergie (6) à un système d'énergie électrique (4) en convertissant l'énergie électrique de la source distribuée d'énergie (6) en courant alternatif correspondant au système d'énergie électrique (4) et en fournissant le courant alternatif après la conversion au système d'énergie électrique (4), le système d'énergie électrique (4) étant connecté à un système d'énergie à bus infini (3),

   le dispositif de conversion d'énergie (10) comprenant :

   une partie de circuit principal (40) configurée pour convertir l'énergie électrique de la source distribuée d'énergie (6) en courant alternatif correspondant au système d'énergie électrique (4) ; et
   un contrôleur (42) configuré pour commander un fonctionnement de la partie de circuit principal (40),

   le contrôleur (42) comprenant :

   un calculateur de valeur estimée (50) configuré pour calculer une valeur estimée d'un composant de résistance d'une impédance du système du système d'énergie électrique (4), une valeur estimée d'un composant de réactance de l'impédance du système, et une valeur estimée d'une valeur de tension du système d'énergie à bus infini (3) sur la base d'une valeur de puissance active d'un point de connexion (LP) au système d'énergie électrique (4), d'une valeur de puissance réactive du point de connexion (LP), et d'une valeur de tension du point de connexion (LP) en utilisant un filtre de Kalman applicable à une équation non-linéaire ;
   un calculateur de puissance réactive (52) configuré pour calculer une valeur de commande de puissance réactive de la puissance réactive fournie au système d'énergie électrique (4) sur la base de la valeur estimée du composant de résistance de l'impédance du système, de la valeur estimée du composant de réactance de l'impédance du système et de la valeur estimée de la valeur de tension du système d'énergie à bus infini (3) ; et
   un circuit d'entraînement (54) configuré pour entraîner la partie de circuit principale (40) afin de produire une puissance active et une puissance réactive prescrites correspondant à la valeur de commande de la puissance réactive,

   **caractérisé en ce que**
   le calculateur de valeur estimée (50) comprend :

   un calculateur d'estimation à basse vitesse (62) configuré pour calculer la valeur estimée du composant de résistance de l'impédance du système, la valeur estimée du composant de réactance de l'impédance du système, et la valeur estimée de la valeur de tension du système d'énergie à bus infini (3) ;
   un calculateur d'estimation à grande vitesse (64) configuré pour calculer la valeur estimée du composant de résistance de l'impédance du système, la valeur estimée du composant de réactance de l'impédance du système et la valeur estimée de la valeur de tension du système d'énergie à bus infini (3) en échantillonnant la valeur de puissance active, la valeur de puissance réactive et la valeur de tension du point de connexion (LP) à un taux d'échantillonnage plus rapide que celui du calculateur d'estimation à basse vitesse (62) ; et
   un circuit de commande (66) configuré pour faire fonctionner sélectivement seulement l'un parmi le calculateur d'estimation à basse vitesse (62) et le calculateur d'estimation à grande vitesse (64) en commandant une commutation du calculateur d'estimation à basse vitesse (62) et du calculateur d'estimation à grande vitesse (64),

   le calculateur d'estimation à basse vitesse (62) et le calculateur d'estimation à grande vitesse (64) étant configurés pour calculer une valeur prédite de la valeur de tension du point de connexion (LP) sur la base de la valeur estimée du composant de résistance de l'impédance du système, de la valeur estimée du composant de réactance de l'impédance du système, et de la valeur estimée de la valeur de tension du système d'énergie à bus infini (3), et pour déterminer une erreur de prédiction de la valeur de tension du point de connexion (LP) sur la base d'une valeur mesurée de la valeur de tension du point de connexion (LP) et de la valeur prédite de la valeur de tension du point de connexion (LP),
le circuit de commande (66) étant configuré pour :

arrêter le fonctionnement du calculateur d'estimation à basse vitesse (62) et démarrer le fonctionnement du calculateur d'estimation à grande vitesse (64) lorsqu'une valeur absolue de l'erreur de prédiction entrée par le calculateur d'estimation à basse vitesse (62) dans un état d'arrêt du fonctionnement du calculateur d'estimation à grande vitesse (64) et de fonctionnement du calculateur d'estimation à basse vitesse (62) est supérieure à un premier seuil ; et
arrêter le fonctionnement du calculateur d'estimation à grande vitesse (64) et démarrer le fonctionnement du calculateur d'estimation à basse vitesse (62) lorsque la valeur absolue de l'erreur de prédiction entré par le calculateur d'estimation à grande vitesse (64) dans un état d'arrêt du fonctionnement du calculateur d'estimation à basse vitesse (62) et de fonctionnement du calculateur d'estimation à grande vitesse (64) est inférieure à un second seuil inférieur au premier seuil.

2.  Dispositif de conversion d'énergie (10) selon la revendication 1, dans lequel le calculateur d'estimation à basse vitesse (62) et le calculateur d'estimation à grande vitesse (64) sont configurés pour utiliser un filtre de Kalman étendu comme filtre de Kalman applicable à l'équation non linéaire.

3.  Dispositif de conversion d'énergie (10) selon la revendication 2, dans lequel

le calculateur d'estimation à basse vitesse (62) et le calculateur d'estimation à grande vitesse (64) sont configurés pour prédire un vecteur d'état ayant le composant de résistance de l'impédance du système, le composant de réactance de l'impédance du système et la valeur de tension du système d'énergie à bus infini (3) en tant que composants, et pour calculer les composants du vecteur d'état après la prédiction respectivement comme la valeur estimée du composant de résistance de l'impédance du système du système d'énergie électrique (4), la valeur estimée du composant de réactance de l'impédance du système, et la valeur estimée de la valeur de tension du système d'énergie à bus infini (3),
le contrôleur (42) est configuré pour faire fonctionner la partie de circuit principal (40) sur la base des valeurs estimées calculées et pour acquérir la valeur de la puissance active, la valeur de la puissance réactive et la valeur de la tension du point de connexion (LP) lors du fonctionnement de la partie de circuit principal (40), et le calculateur d'estimation à basse vitesse (62) et le calculateur d'estimation à grande vitesse (64) sont configurés pour mettre à jour le vecteur d'état sur la base de la valeur de la puissance active acquise, de la valeur de la puissance réactive acquise et de la valeur de la tension acquise du point de connexion (LP).

4.  Dispositif de conversion d'énergie (10) selon la revendication 3, dans lequel le calculateur d'estimation à basse vitesse (62) et le calculateur d'estimation à grande vitesse (64) sont configurés pour utiliser le vecteur d'état après la mise à jour comme vecteur d'état après la prédiction.

5.  Dispositif de conversion d'énergie (10) selon la revendication 3 ou 4, dans lequel
le calculateur d'estimation à basse vitesse (62) et le calculateur d'estimation à grande vitesse (64) sont configurés pour :

prédire le vecteur d'état et prédire une matrice de covariance relative à une erreur du vecteur d'état après la prédiction ;
après avoir acquis des valeurs mesurées de la valeur de la puissance active, de la valeur de la puissance réactive et de la valeur de la tension du point de connexion (LP), optimiser un gain de Kalman pour mettre à jour le vecteur d'état sur la base de la matrice de covariance et des valeurs mesurées acquises ;
déterminer une erreur de prédiction de la valeur de tension du point de connexion (LP) sur la base de la valeur mesurée de la valeur de tension du point de connexion (LP) et de la valeur prédite de la valeur de tension du point de connexion (LP) calculée à l'aide du vecteur d'état après la prédiction ; et
mettre à jour le vecteur d'état sur la base de l'erreur de prédiction et du gain de Kalman optimisé et mettre à jour la matrice de covariance sur la base du gain de Kalman optimisé.

6.  Dispositif de conversion d'énergie (10) selon la revendication 5, dans lequel le calculateur d'estimation à grande vitesse (64) est configuré pour fixer la matrice de covariance à une valeur initiale lors du démarrage du fonctionnement.

**7.** Dispositif de conversion d'énergie (10) selon la revendication 5 ou 6, dans lequel

le calculateur d'estimation à grande vitesse (64) est configuré pour entrer la matrice de covariance déterminée dans le circuit de commande (66),
le circuit de commande (66) est configuré pour entrer, dans le calculateur d'estimation à basse vitesse (62), la matrice de covariance entrée par le calculateur d'estimation à grande vitesse (64) lors du démarrage du fonctionnement du calculateur d'estimation à basse vitesse (62), et
le calculateur d'estimation à basse vitesse (62) est configuré pour fixer la matrice de covariance entrée par le circuit de commande (66) à une valeur initiale de la matrice de covariance.

**8.** Dispositif de conversion d'énergie (10) selon l'une quelconque des revendications 3 à 7, dans lequel

le calculateur d'estimation à basse vitesse (62) et le calculateur d'estimation à grande vitesse (64) sont configurés pour entrer, dans le circuit de commande (66), la valeur estimée calculée du composant de résistance de l'impédance du système, la valeur estimée calculée du composant de réactance de l'impédance du système, et la valeur estimée calculée de la valeur de tension du système d'énergie à bus infini (3),
le circuit de commande (66) est configuré pour :

entrer, dans le calculateur d'estimation à basse vitesse (62), la valeur estimée du composant de résistance de l'impédance du système, la valeur estimée du composant de réactance de l'impédance du système et la valeur estimée de la valeur de la tension du système d'énergie à bus infini (3) entrée par le calculateur d'estimation à grande vitesse (64) lors du démarrage du fonctionnement du calculateur d'estimation à basse vitesse (62) ; et
entrer, dans le calculateur d'estimation à grande vitesse (64), la valeur estimée du composant de résistance de l'impédance du système, la valeur estimée du composant de réactance de l'impédance du système et la valeur estimée de la valeur de la tension du système d'énergie à bus infini (3) entrée par le calculateur d'estimation à basse vitesse (62) lors du démarrage du fonctionnement du calculateur d'estimation à grande vitesse (64), et

lors du démarrage du fonctionnement, le calculateur d'estimation à basse vitesse (62) et le calculateur d'estimation à grande vitesse (64) sont configurés pour fixer la valeur estimée du composant de résistance de l'impédance du système, la valeur estimée du composant de réactance de l'impédance du système, et la valeur estimée de la valeur de la tension du système d'énergie à bus infini (3) entré par le circuit de commande (66) comme valeurs initiales de la valeur estimée du composant de résistance de l'impédance du système, de la valeur estimée du composant de réactance de l'impédance du système et de la valeur estimée de la valeur de la tension du système d'énergie à bus infini (3).

**9.** Dispositif de conversion d'énergie (10) selon l'une quelconque des revendications 1 à 8, dans lequel

le calculateur de puissance réactive (52) est configuré pour recevoir une entrée d'une valeur désignée d'une tension du point de connexion (LP), et
le calculateur de puissance réactive (52) est configuré pour pouvoir commuter entre le calcul de la valeur de commande de puissance réactive pour amener la valeur de tension du point de connexion (LP) à se rapprocher de la valeur de tension du système d'énergie à bus infini (3) et le calcul de la valeur de commande de puissance réactive pour amener la valeur de tension du point de connexion (LP) à se rapprocher de la valeur désignée.

**10.** Système de source distribuée d'énergie (2), comprenant :

une source distribuée d'énergie (6) ; et
le dispositif de conversion d'énergie (10) selon l'une quelconque des revendications 1 à 9 configuré pour connecter la source distribuée d'énergie (6) à un système d'énergie électrique (4) en convertissant l'énergie électrique de la source distribuée d'énergie (6) en courant alternatif correspondant au système d'énergie électrique (4) et en fournissant le courant alternatif après la conversion au système d'énergie électrique (4).

FIG. 1

FIG. 2

24

FIG. 3

FIG. 4

FIG. 5

FIG. 6A

FIG. 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017034739 A
- US 2013250635 A1

- US 2019181639 A1
- US 2015303861 A1

### Non-patent literature cited in the description

- Decentralised voltage regulation in smart grids using reactive power from renewable DG. **ANNA RITA DI FAZIO ; GIUSEPPE FUSCO ; MARIO RUSSO.** ENERGY CONFERENCE AND EXHIBITION (ENERGYCON), 2012 IEEE International. IEEE, 09 September 2012, 580-586

- A Voltage Stability Control based on Impedance Estimation for the Independent Microgrid. **WANG LI-JUN et al.** 2018 IEEE INTERNATIONAL POWER ELECTRONICS AND APPLICATION CONFERENCE AND EXPOSITION (PEAC). IEEE, 04 November 2018, 1-5